Europäisches Patentamt

European Patent Office

Office européen des brevets

(11) Publication number: **0 202 534 B1**

## EUROPEAN PATENT SPECIFICATION

(45) Date of publication of patent specification: **11.04.90**

(21) Application number: **86106172.9**

(22) Date of filing: **06.05.86**

(51) Int. Cl.⁵: **G 10 L 5/06**

(54) Continuous word recognition system.

(30) Priority: **07.05.85 JP 96207/85**
**07.05.85 JP 96208/85**

(43) Date of publication of application:
**26.11.86 Bulletin 86/48**

(45) Publication of the grant of the patent:
**11.04.90 Bulletin 90/15**

(84) Designated Contracting States:
**DE FR GB**

(56) References cited:
**US-A-4 513 435**

**IBM TECHNICAL DISCLOSURE BULLETIN, vol.
24, no. 4, September 1981, pages 2042,2043,
New York, US; L.R. BAHL et al.: "Automatic
selection of speech prototypes"**

(73) Proprietor: **NEC CORPORATION
33-1, Shiba 5-chome, Minato-ku
Tokyo 108 (JP)**

(72) Inventor: **Fujii, Hiromi c/o NEC Corporation
33-1, Shiba 5-chome Minato-ku
Tokyo (JP)**
Inventor: **Sakoe, Hiroaki c/o NEC Corporation
33-1, Shiba 5-chome Minato-ku
Tokyo (JP)**
Inventor: **Watari, Masao c/o NEC Corporation
33-1, Shiba 5-chome Minato-ku
Tokyo (JP)**

(74) Representative: **Vossius & Partner
Siebertstrasse 4 P.O. Box 86 07 67
D-8000 München 86 (DE)**

(56) References cited:
**THE BELL SYSTEM TECHNICAL JOURNAL, vol.
61, no. 6, July-August 1982, pages 981-1001,
American Telephone and Telegraph Co., New
York, US; L.R. RABINER et al.: "An improved
training procedure for connected-digit
recognition"**

Courier Press, Leamington Spa, England.

## Description

The present invention relates to improvements in recognition accuracy in a continuous word recognition system.

Speech recognition is effective as a measure for inputting data and commands to a computer, and many recognition systems have been sold in the past. As a principle of recognition in these systems, a pattern matching process has been widely employed. According to this process, one or a plurality of reference patterns for a word to be recognized are prepared, and comparison is made between an input pattern and the reference patterns and a word belonging to the category of the most similar reference pattern is determined to be a result of recognition. Through this process, a sufficiently high recognition rate has been obtained in the case of recognition of discretely spoken words.

In the case of continuously spoken words also, they can be recognized according to the principle of the pattern matching process, but in continuous speech there occurs the phenomenon of "coarticulation" in which physical characteristics of a pattern are distorted due to influence of successively concatenated phonemes. Consequently, the distorted pattern becomes substantially different from the reference pattern of discretely spoken words, and this has resulted in erroneous recognition.

Among the current proposed methods as a counter-measure for this problem of coarticulation, one is a continuous word recognition method making use of demi-word pair reference patterns. A detailed description of this method is found in U.S. Patent 4,513,435 entitled "System Operable as an Automaton for Recognizing Continuously Spoken Words with Reference to Demi-Word Pair Reference Patterns". In this method, a paired pattern of demi-words formed by segmenting out a latter half of a given word to a former half of the next word in continuously spoken words is employed as a reference pattern. This demi-word pair pattern is characterized in that it contains a boundary between words, that is, a transient portion influenced by coarticulation. Accordingly, by preparing demi-word pair reference patterns for all the word pairs, it becomes possible to deal with the distortion caused by coarticulation.

The demi-word pair reference patterns are produced from discretely spoken words and a continuously spoken word series. In the following, the procedure for producing them will be explained.

At first, discrete demi-word pair patterns are produced from discretely spoken words. For all the discretely spoken words, respective intra-word central time points are sought, and respective discrete demi-word pair patterns are formed of the former half portions and the latter half portions with respect to the intra-word central time points. Subsequently, continuous demi-word pair patterns are produced from continuously spoken words. By carrying out pattern matching between a continuously spoken word series and discretely spoken words for which the intra-word characteristic points have been determined, the corresponding central time points are sought on the continuously spoken words, and then a segment from an intra-word central time point of a preceding word to an intra-word central time point of a succeeding word is segmented out to be used as a continuous demi-word pair pattern. The continuous demi-word pair patterns are produced for all the word pairs. Next, recognition processing through the pattern matching process is effected by making use of the thus obtained discrete and continuous demi-word pair patterns as reference patterns. The results of recognition are obtained as a category name series of the reference pattern series for which the maximum similarity was attained. At this time, in order that the concatenation of reference patterns may not become discontinuous, the pattern matching is effected under automaton control.

As described above, the demi-word pair reference pattern system has been effective for resolving the problem of coarticulation because the reference patterns can have the physical characteristics of the distortion caused by coarticulation at the interface between words.

However, among operators and users who are inexperienced in the recognition apparatus, there is a large variation in speech, and for some people a sufficient recognition rate is not obtained even with the above-mentioned system. For instance, in some cases even the same user uses different modes of speech, i.e., both discrete words and continuous words. In the heretofore known demi-word pair reference pattern system, since the intra-word central time points in continuous speech were sought by carrying out matching with discrete speech, not only can the correspondence to the time axis not be determined accurately, but also it is doubtful whether the determined intra-word central time points are proper or not as central time points. As a result, in some cases, concatenation of reference patterns upon recognition becomes discontinuous, and erroneous recognition results. In addition, in continuous word speech, due to the influences of preceding and succeeding words, there may occur conversion to a voiceless sound or conversion to a nasal sound of a vowel sound and omission of utterance, and sometimes even the same word would result in various different patterns. It is difficult to speak all such pattern variations upon registration. Although one may conceive of the method of increasing the diversity of patterns by increasing the number of times registration is performed, in that case the registration requires a lot of time and labor. Especially, in the case of beginners who have little experience in the use of the speech recognition apparatus, upon registration they often may be strained and may speak in a monotone mode. Consequently, upon recognition, as the user becomes experienced in speaking, the patterns may become different from those produced at registration, so that erroneous recognition may occur frequently.

As described above, in the heretofore known continuous speech recognition system relying upon demi-word pair reference patterns, there has been a shortcoming that the system cannot be adapted to the diversity of speeches and, especially in the case of beginners a high recognition rate has not been obtainable.

Summary of the invention

It is one object of the present invention to provide a speech recognition system having a higher accuracy, in which shortcomings in the prior art are eliminated and various modified reference patterns can be prepared so as to adapt to the diversity of speech without increasing time and labor for registration.

According to the present invention, there is provided a continuous word recognition system as claimed in claim 1.

Brief description of the drawings

Figure 1 is a block diagram;

Figures 2 and 3 are schematic diagrams to be used for explaining the principle of segmenting of reference patterns;

Figure 4 is a block diagram showing a second preferred embodiment of the present invention; and

Figure 5 is a schematic diagram showing amendment to a fixed demi-word pair pattern in the second preferred embodiment.

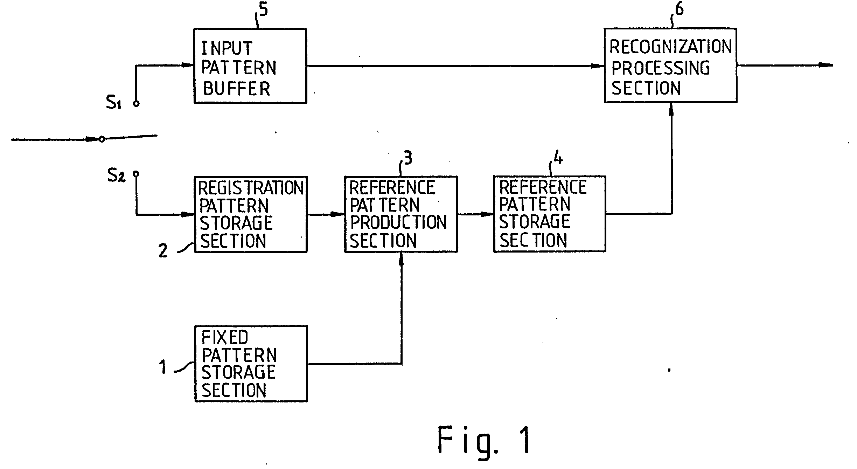

Reference is made in Figure 1. In a fixed pattern storage section 1 there are fixedly held a group of reference patterns. The term "reference pattern" as used here means speech data of a word which becomes an object of recognition, and in general it is represented by a time series of characteristic vectors. For the above-mentioned fixedly held reference patterns (hereinafter called "fixed patterns"), possible modified patterns spoken by those skilled in the art on the basis of knowledge of phonetics or patterns subjected to various modifications which were selected from a group of many patterns are employed. Examples of such modifications include conversion to a voiceless sound, conversion to a nasal sound or omission.

Here, as the fixed patterns, discrete patterns are prepared, and these fixed patterns are designated as $B_m^n$, where m designates a spoken word and n represents the number of times it is spoken.

The operation of the continuous word recognition system according to the present invention is divided into a reference pattern production mode which demi-word pair reference patterns are produced for registration patterns spoken by a user and the fixed patterns, and a recognition mode in which recognition is effected. In the following, description will be made on the respective modes.

In the reference pattern production mode, discrete demi-word pair patterns are produced from discrete speech, and continuous demi-word pair patterns are subsequently produced from continuous speech. Finally, amendment to the fixed patterns is effected. Here, by way of example, description will be made by selecting numerals as the object of recognition.

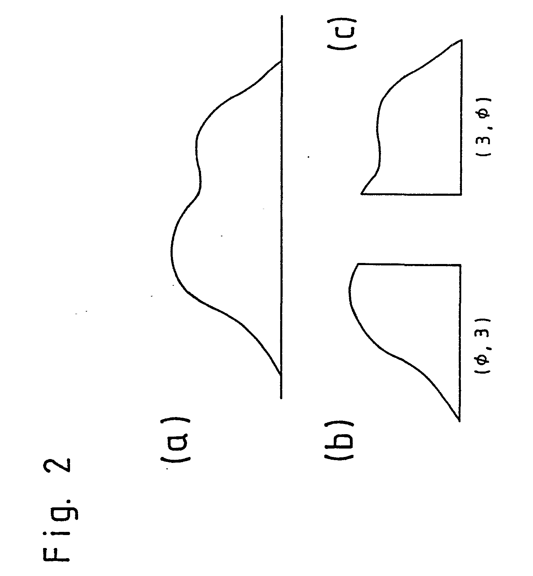

At first, when speech data ($A_m^n$, m=0, 1, . . ., 9; n=1) of discrete spoken words through "0" through "9" are input, these data are stored as time series of feature parameters in a registration pattern storage section 2. In a reference pattern production section 3, an intra-word time point is sought from the discrete speech data held in the registration pattern storage section 2, and the data portion before the intra-word time point is sent as a former half pattern into a reference pattern storage section 4, while the data portion after the intra-word time point is sent as a latter half pattern into the reference pattern storage section 4. With regard to the method for seeking the intra-word time point, the same method as that disclosed in the above-referenced U.S. Patent 4,513,435 can be employed. More particularly, in the case where "3" ("san" in Japanese) has been input, one may adopt the method in which a middle point in time of the word time interval is chosen as an intra-word time point. This mode is schematically shown in Figures 2(a), (b) and (c). In these figures, the input discrete speech pattern is shown in Figure 2(a), the former half pattern is shown in Figure 2(b) and the latter half pattern is shown in Figure 2(c). The obtained former half pattern of "3" is represented by $A'(\phi,3)$, the latter half pattern of "3" is represented by $A'(3,\phi)$, and these are called discrete demi-word pair reference patterns. Here, the symbol "$\phi$" means "blank", and $A'(\phi,3)$ can be deemed as a demi-word pair pattern for a blank word "$\phi$" and a word "3". Practically, it means that before "3" no word is concatenated. Similar processings are carried out for all the words of the user's discrete spoken words $A_m^n$, and thereby discrete demi-word pair patterns $A'(\phi,m)$, $A'(m,\phi)$, m=0, 1, . . ., 9 are produced.

After the demi-word pair patterns for the user's speech have been produced, in a similar manner intra-word time points (central time points) are sought also for the fixed patterns ($B_m^n$, m=0, 1, . . ., 9; n=1) in the fixed pattern storage section 1, then they are divided into former half patterns and latter half patterns, and thereby fixed discrete demi-word pair reference patterns [$B'(\phi,0)$, $B'(0,\phi)$, . . ., $B'(\phi,9)$, $B'(9,\phi)$] are produced. In this way, demi-word pair reference patterns are produced from both the user's discrete patterns and the fixed patterns, and they are stored in the reference pattern storage section 4.

After the demi-word pair patterns have been produced for discrete speech, two-digit continuous spoken words of "00" through "99" are successively spoken by a user, and these time series of feature parameters are stored in the registration pattern storage section 2 similarly to the discrete speech. In the reference pattern production section 3, continuous demi-word pair patterns are segmented out of the continuous speech data held in the registration pattern storage section 2. In the case of the two-digit continuous speech, the continuous demi-word pair pattern consists of a latter half portion of the first digit and a former half portion of the second digit. With regard to the method for segmenting out a continuous demi-word pair pattern, the method disclosed in the above-referenced U.S. Patent 4,513,435 is employed. In more detail, pattern matching is effected by employing the continuous speech of two digits as an input pattern and by employing a concatenated pattern of discrete demi-word pair patterns corresponding thereto as a reference pattern, and a similarity is sought in the case where the optimum adaptation in time has been established. Likewise, a similarity is sought for all the combinations of the demi-word pair patterns produced from the user's discrete demi-word pair patterns and the fixed patterns, and segmenting is effected for the combination having the largest similarity. What is segmented out is the portion corresponding to the latter half demi-word pair pattern for the first digit and the former half demi-word pair pattern for the second digit. By way of example, description will be made on the procedure for segmenting out a continuous demi-word pair pattern (5, 8) from continuous speech "58" (read 'five-eight', or "gohachi" in Japanese).

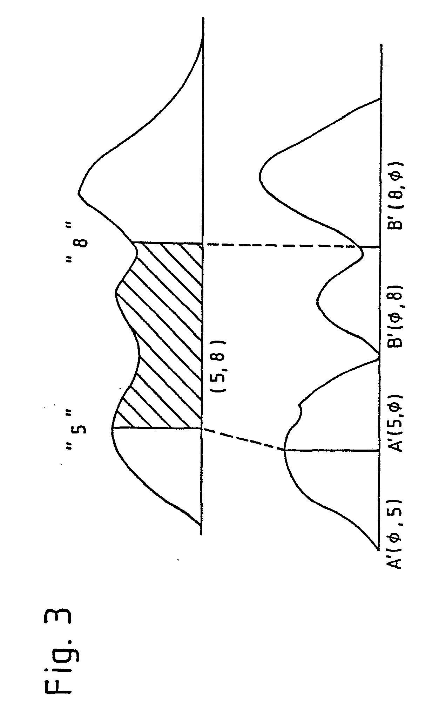

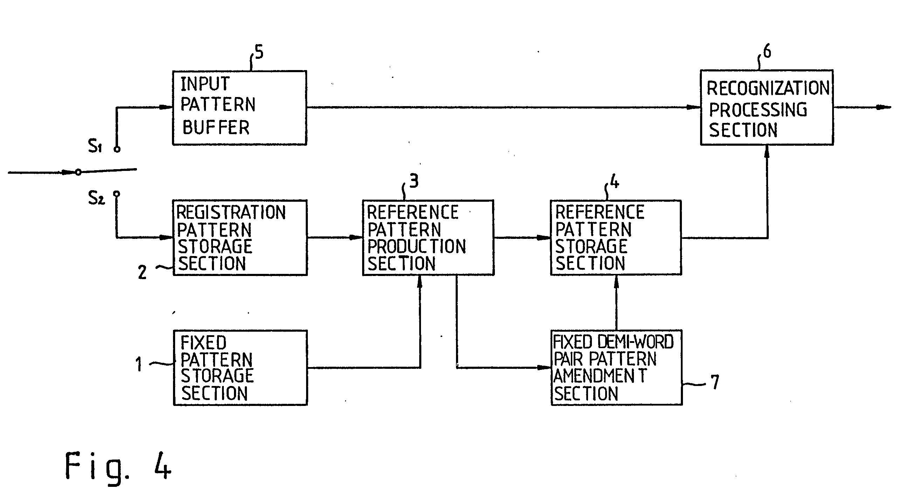

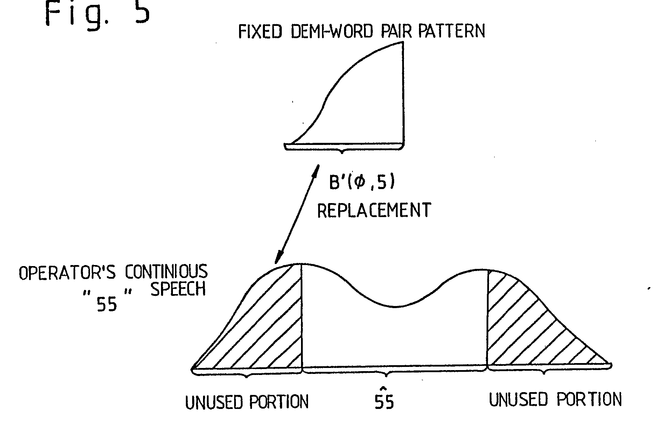

The input pattern of "58" is read out of the registration pattern storage section 2, and is sent to the reference pattern production section 3. In the reference pattern production section for the input pattern of "58", time axis adaptation to concatenated patterns of discrete demi-word pair patterns $(\phi,5)$, $(5,\phi)$, $(\phi,8)$, $(8,\phi)$ is effected, and the portion corresponding to $(5,\phi)$, $(\phi,8)$ is segmented out as a continuous demi-word pair pattern (5,8). Here, as the discrete demi-word pair patterns needed for matching, besides those produced from the user's own patterns, those produced from fixed patterns can be employed. Figure 3 shows one example of segmenting of (5,8) which was effected by matching between a user's own pattern "5" and a fixed pattern "8".

The method for time axis adaptation is described in detail in the above-referenced U.S. Patent 4,513,435, and further explanation thereof will be omitted here.

Upon segmenting when there exist a plurality of patterns for one kind of discrete demi-word pair pattern as is the case where both the user's own patterns and the fixed patterns are employed, matching is carried out for all combinations of patterns, and a continuous demi-word pair pattern is segmented out for a concatenation of discrete demi-word pair patterns having the largest similarity.

Segmenting of continuous demi-word pair patterns is effected for all the continuous speeches, and through the same processing as that described above, 100 varieties of continuous demi-word pair patterns for (0,0) to (9,9) are produced and stored in the reference pattern storage section 4. Then the reference pattern production mode is finished.

In the recognition mode, successive digits in a multi-digit numeral input to a pattern buffer 5 and a concatenated pattern consisting of the demi-word pair patterns in the reference pattern storage section 4 are subjected to pattern matching in a recognition processing section 6, and thereby recognition is effected. Upon recognition, control is effected by a finite-state automaton so that contradiction may not arise in the obtained result and the concatenation of demi-word pair patterns. For instance, a limitation that after the pattern $(\phi,3)$, the pattern $(3,x)$ $[x=\phi, 0, 1, 2, \ldots, 9]$ must be concatenated, is imposed. With regard to the construction and operation of the above-referenced recognition processing section 6 which carries out recognition processing under control of a finite state automaton and the finite state automaton, they are described in the above-referenced U.S. Patent 4,513,435, and further explanation thereof will be omitted here.

The result is determined from the demi-word pair pattern having the largest similarity among an allowable concatenated series of demi-word pair patterns. For instance, assuming that series of $(\phi,7)$ $(7,6)$ $(6,\phi)$ has been obtained, the result of recognition is "76".

Furthermore, according to another feature of the present invention, prepared fixed patterns are subjected to amendment processing by making use of information of user's speech, and thereby reference patterns more adapted to the user's speech can be obtained. This amendment of fixed patterns is effected by making use of the information of the portion of the registration pattern spoken by a user left after a segment has been segmented out as a reference pattern, that is, the unused portion. This feature can be structurally realized by providing a fixed pattern amendment section. This forms a second preferred embodiment of the present invention, and it will be explained in the following.

Reference is now made to Figure 4 which shows the present invention, like reference numerals to Figure 1 are used for like parts and in which a fixed demi-word pair pattern amendment section 7 is additionally provided. Continuous demi-word pair patterns are produced as reference patterns, and after they have been stored in the reference pattern storage section 4, subsequently amendment to the fixed demi-word pair patterns is effected in the fixed demi-word pair pattern amendment section 7. This processing is considered to be an adaptation processing for amending the fixed demi-word pair patterns which were not produced from the user's speech to more adapted reference patterns by making use of the user's patterns. The amendment is effected by making use of the information of the portion corresponding to $(\phi,5)$ $(8,\phi)$ in the case of the example "58" illustrated in Figure 3. By way of example, it is assumed here that the operation of replacing this unused portion for the fixed pattern is carried out. In Figure 5 is shown an example of amendment to a fixed demi-word pair pattern of F'(φ,5). This basic concept is such that when a modification similar to a particular fixed demi-word pair pattern has appeared in an unused portion of continuous speech, the unused portion is employed in place of the corresponding segment of a fixed reference pattern. In other words, explaining in terms of the example shown in Figure 5, the fixed demi-word pair pattern B'(φ,5) to be replaced by the unused portion of the continuous pattern is the portion of the fixed pattern the least distance from the continuous pattern matched with the fixed demi-word pair pattern upon segmenting. By this processing, the pattern of the portion which was unused and wasted in the heretofore known system, is utilized effectively as a supplementary pattern that can be adapted to the diversity of the user's speech. In this case, the distance of the unused portion is that held for each one of the matched fixed demi-word pair patterns in the segmenting of the continuous demi-word pair pattern. Accordingly, at the time point when the segmenting of the continuous demi-word pair pattern has finished, a continuous pattern at the least partial distance is sought for each fixed demi-word pair pattern and amendment can be effected by making use of the unused portion of the pattern. This operation is carried out for every one of the fixed demi-word pair patterns used for segmenting of the continuous demi-word pair pattern.

After production of the discrete demi-word pair patterns and the continuous demi-word pair patterns, amendment to the fixed demi-word pair patterns is carried out, and when the amended patterns have been stored in the reference pattern storage section 4, the reference pattern production mode is finished.

While a principle of the present invention has been described above in connection with preferred embodiments of the invention, it is intended that the description of the preferred embodiments should not limit the scope of the present invention. For instance, as fixed patterns, not only discrete speech patterns but also continuous speech patterns can be employed, and in that case it is also possible to carry out amendment to the employed fixed continuous speech patterns. In addition, there is no need to use all of the fixed patterns as reference patterns for the purpose of recognition, but only a part of them could be used. Furthermore, the amendment to the fixed demi-word pair patterns need not be replacement, but a method of producing average patterns or weighted average patterns or a method of adding other patterns could be employed.

According to the present invention, by holding modified patterns prepared fixedly as reference patterns, it is possible to correctly recognize even a modified pattern which was not spoken by a user upon registration and thereby improve a recognition rate. In other words, if modification of an input pattern is of the same kind as that upon registration, then a correct result can be obtained because the similarity to a user's reference pattern becomes great, and even if it is of a different kind, a similarity to a fixed discrete demi-word pair pattern becomes high, and thereby a correct result can be obtained.

In addition, upon segmenting a continuous demi-word pair pattern, a demi-word pair reference pattern can be segmented at correct intraword time points by employing fixed discrete demi-word pair patterns also for matching. In other words, in the case where the mode of user's speech is of a different kind between discrete speech and continuous speech, the correspondence along the time axis becomes inaccurate. Therefore, if there is a pattern that is of the same kind as or close to a modification of continuous speech among fixed patterns which consist of various kinds of modified patterns, then an intraword time point can be obtained accurately by matching with the fixed patterns. Accordingly, errors in segmenting of reference patterns are reduced as compared to the prior art, and therefore, with the effect that the quality of the reference patterns is improved and erroneous recognition is reduced.

Moreover, according to the present invention, reference patterns adapted to user's speech can be increased without increasing time and labor for registration, because an unused portion of a registration pattern is utilized. Accordingly, reliability of recognition is enhanced and the recognition rate is improved. Furthermore, by amending fixed patterns by means of user's patterns, fixed patterns of poor quality, i.e., fixed patterns which are close in distance to a different category and which are liable to induce errors, can be reduced. Therefore, the present invention is advantageous in that erroneous recognition is reduced.

**Claims**

1. A continuous word recognition system comprising:

a registration pattern storage (2) means for storing registration patterns, said registration patterns including patterns of discretely spoken words and continuously spoken word pairs of said plurality of words spoken by a user, each word pair including at least a first word and a subsequent word;

a reference pattern production means (3) for producing demi-word pair reference patterns each consisting of time-serial feature parameters for a segment in each said continuously spoken word pair starting from a first time point of said first word and ending at a second time point of said subsequent word

a reference pattern storage means (4) for storing said reference patterns produced in said reference pattern production means;

an input pattern buffer means (5) for storing an input pattern said input pattern consisting of time-serial feature parameters of continuously spoken words by said user; and

a recognition means (6) for recognizing said input pattern as a concatenation of said demi-word pair reference patterns by matching said input pattern with concatenations of said demi-word pair reference patterns stored in said pattern storage means characterized by

a fixed pattern storage (1) means for storing a predetermined fixed pattern for each of a plurality of reference words, said fixed patterns comprising of time-serial feature parameters;

said producing being effected by making use of a pattern matching method between the continuously spoken word pair pattern and patterns consisting of combinations of said fixed patterns and said discretely spoken word patterns;

a fixed pattern amendment means (7) for amending at least a part of one of said fixed patterns based on information obtained in the operation of said reference pattern production means said information including a part of the combination pattern of said fixed pattern and said discretely spoken word pattern which is most similar pattern to said continuously spoken word pair.

2. A continuous word recognition system according to Claim 1, further comprising a control means for controlling said concatenations on the basis of a finite-state automaton.

3. A continuous word recognition system according to Claim 1 or 2, wherein said first and second time points are central time points of said former and latter words, respectively.

4. A continuous word recognition system according to any of Claims 1 or 3, further comprising a fixed pattern amendment means for amending at least a part of one of said fixed patterns based on information obtained in the operation of said reference pattern production means.

5. A continuous word recognition system according to Claim 4, wherein said information includes a part of the combination pattern of said fixed pattern and said discretely spoken word pattern which is most similar pattern to said continuously spoken word pair.

6. A continuous word recognition system according to Claim 4 or 5, wherein said fixed pattern amendment means replaces said at least a part of the fixed pattern with said information.

**Patentansprüche**

1. System zur Erkennung kontinuierlicher Sprache mit:

einer Registrierungsmusterspeichereinrichtung (2) zum Speichern von Registrierungsmustern, die Muster von diskret gesprochenen Wörtern und Paaren kontinuierlich gesprochener Wörter aus mehreren Wörtern, die von einem Anwender gesprochen werden, aufweisen, wobei jedes Wortpaar wenigstens ein erstes und ein folgendes Wort aufweist;

eine Referenzmustererzeugungseinrichtung (3) zum Erzeugen von Worthälftenpaarreferenzmustern, wobei jedes aus zeitseriellen Merkmalparametern für ein Segment in jedem kontinuierlich gesprochenem Wortpaar besteht, die von einem ersten Zeitpunkt des ersten Wortes an beginnen und zu einem zweiten Zeitpunkt des folgenden Wortes enden;

eine Referenzmusterspeichereinrichtung (4) zum Speichern der Referenzmuster, die in der Referenzmustererzeugungseinrichtung erzeugt werden;

eine Eingangsmusterpuffereinrichtung (5) zum Speichern eines Eingangsmusters, wobei das Eingangsmuster aus zeitseriellen Merkmalsparametern von kontinuierlich gesprochenen Wörtern des Anwenders besteht; und

eine Erkennungseinrichtung (6) zum Erkennen des Eingangsmusters als Verkettung der Worthälftenpaarreferenzmuster durch Anpassen der Eingangsmuster an die Verkettungen der Worthälftenpaarreferenzmuster, die in der Musterspeichereinrichtung gespeichert sind, gekennzeichnet durch eine Festmusterspeichereinrichtung (1) zum Speichern eines vorbestimmten Festmusters für jedes von mehreren Referenzwörtern, wobei die Festmuster zeitserielle Merkmalsparameter aufweisen;

wobei ihre Erzeugung bewirkt wird durch die Anwendung eines Musteranpassungsverfahrens zwischen dem Muster von Paarn kontinuierlich gesprochener Wörter und den Mustern, die aus Kombinationen von Festmustern und diskret gesprochenen Wortmustern bestehen;

eine Festmusterkorrektureinrichtung (7) zum Korrigieren wenigstens eines Teils von einem der Festmuster, die auf der Information beruht, die durch die Operation der Referenzmustererzeugungseinrichtung erhalten wird, wobei die Information einen Teil des Kombinationsmusters des Festmusters und des Musters diskret gesprochener Wörter, welches das ähnlichste Muster zum Paar kontinuierlich gesprochener Wörter ist, einschließt.

2. System zur Erkennung kontinuierlicher Sprache nach Anspruch 1, ferner mit einer Steuereinrichtung zum Steuern der Verkettungen auf der Basis eines endlichen Automaten.

3. System zur Erkennung kontinuierlicher Sprache nach Anspruch 1 oder 2, wobei die ersten und zweiten Zeitpunkte zentrale Zeitpunkte der vorhergehenden und folgenden Wörter sind.

4. System zur Erkennung kontinuierlicher Sprache nach einem der Ansprüche 1 oder 3, ferner mit einer Festmusterkorrektureinrichtung zum Korrigieren wenigstens eines Teils eines der Festmuster, die auf der Information beruht, die durch die Operation der Referenzmustererzeugungseinheit gewonnen wird.

5. System zur Erkennung kontinuierlicher Sprache nach Anspruch 4, wobei die Information einen Teil des Kombinationsmusters des Festmusters und des Musters der diskret gesprochenen Wörter, das das ähnlichste Muster zum Paar kontinuierlich gesprochener Wörter ist, einschließt.

6. System zur Erkennung kontinuierlicher Sprache nach Anspruch 4 oder 5, wobei die Festmusterkorrektureinrichtung den wenigstens einen Teil des Festmusters mit der genannten Information ersetzt.

**Revendications**

1. Système de reconnaissance de mots en continu comprenant:

un moyen de mémorisation (2) de modèles d'enregistrement servant à mémoriser des modèles d'enregistrement, les modèles d'enregistrement comprenant des modèles de paires de mots énoncés de manière discrète et de mots énoncés de manière continue de la pluralité de mots énoncés par un utilisateur, chaque paire de mots comprenant au moins un premier mot en un mot suivant:

un moyen de production de modèles de référence (3) servant à produire des modèles de référence par paire de demi-mots, chacun étant constitué de paramètres de caractéristiques en série dans le temps pour un segment dans chaque paire de mots énoncés en continu commençant à partir d'un premier point temporel du premier mot et se terminant en un second point temporel du mot suivant;

un moyen de mémorisation de modèles de référence (4) servant à mémoriser les modèles de référence produits dans le moyen de production de modèles de référence;

un moyen de tampon de modèles en entrée (5) servant à mémoriser un modèle en entrée, le modèle en entrée étant constitué de paramètres de caractéristiques en série dans le temps de mots énoncés en continu par l'utilisateur, et

un moyen de reconnaissance (6) servant à reconnaître le modèle en entrée sous la forme d'une concaténation des modèles de référence par paire de demi-mots par concordance du modèle en entrée avec les concaténations des modèles de référence par paire de demi-mots mémorisés dans le moyen de mémorisation de modèles caractérisé par:

un moyen de mémorisation de modèles fixes (1) servant à mémoriser un modèle fixe prédéterminé pour chacun d'une multitude de mots de référence, les modèles fixes comprenant des paramètres de caractéristiques en série dans le temps;

la production étant effectuée en faisant usage d'un procédé de concordance de modèles entre le modèle par paire de mots énoncés en continu et les modèles constitués de combinaison des modèles fixes et des modèles de mots énoncés de manière discrète;

un moyen de modification de modèles fixes (7) servant à modifier au moins une partie de l'un des modèles fixes basé sur les informations obtenues dans le fonctionnement du moyen de production de modèles de référence, les informations comprenant une partie du modèle de combinaison du modèle fixe et du modèle de mots énoncés de manière discrète qui est le modèle le plus similaire à la paire de mots énoncés de manière continue.

2. Système de reconnaissance de mots en continu selon la revendication 1, comprenant en outre un moyen de commande servant à commander les concaténations sur la base d'un automate à états finis.

3. Système de reconnaissance de mots en continu selon la revendication 1 ou 2, dans lequel les premier et second points temporels sont des points temporels centraux des premier et dernier mots, respectivement.

4. Système de reconnaissance de mots en continu selon l'une quelconque des revendications 1 à 3, comprenant en outre un moyen de modification de modèles fixes servant à modifier au moins une partie de l'un des modèles fixes basé sur les informations obtenues dans le fonctionnement du moyen de production de modèles de référence.

5. Système de reconnaissance de mots en continu selon la revendication 4, dans lequel les informations comprennent une partie du modèle de combinaison du modèle fixe et du modèle de mots énoncés de manière discrète qui est le modèle le plus similaire à la paire de mots énoncés de manière continue.

6. Système de reconnaissance de mots en continu selon la revendication 4 ou 5, dans lequel le moyen de modification de modèles fixes remplace au moins une partie du modèle fixe par lesdites informations.

Fig. 1

EP 0 202 534 B1

Fig. 2

(a)

(b)

(c)

$(\emptyset, 3)$

$(3, \emptyset)$

EP 0 202 534 B1

Fig. 3

"5"    "8"

(5,8)

A'(φ,5)    A'(5,φ)    B'(φ,8)    B'(8,φ)

Fig. 4

# Fig. 5

FIXED DEMI-WORD PAIR PATTERN

B'(φ,5)
REPLACEMENT

OPERATOR'S CONTINIOUS
" 55 " SPEECH

UNUSED PORTION          $\hat{5}\hat{5}$          UNUSED PORTION